# EUROPÄISCHE PATENTSCHRIFT

(11) **EP 3 228 217 B1**
(45) Veröffentlichungstag und Bekanntmachung des Hinweises auf die Patenterteilung: **14.08.2019**
(21) Anmeldenummer: 17165556.6
(22) Anmeldetag: 07.04.2017
(51) Int. Cl.: A47B 57/54, F16B 12/10

(54) **STRUKTURELEMENT**
STRUCTURAL ELEMENT
ÉLÉMENT STRUCTUREL

(30) Priorität: 08.04.2016 DE 102016004267
(43) Veröffentlichungstag der Anmeldung: 11.10.2017
(73) Patentinhaber: Bulthaup GmbH & Co. KG, 84155 Bodenkirchen (DE)
(72) Erfinder: Eckert, Marc O., 84155 Bodenkirchen (DE); Rieger, Roger P., 84028 Landshut (DE); Spohde, Ulrich, 84155 Bodenkirchen (DE)
(74) Vertreter: Herrmann, Uwe

(56) Entgegenhaltungen:
- EP-A1- 1 287 763
- EP-A1- 2 602 494
- WO-A1-2005/025376
- WO-A1-2010/097770
- WO-A1-2012/017386
- DE-A1- 19 807 663
- DE-U1- 20 100 582
- US-B2- 6 712 540

## Beschreibung

Die vorliegende Erfindung betrifft ein Strukturelement, insbesondere ein Möbelelement und besonders bevorzugt ein Küchenmöbel-Element. Möbelelemente für Küchen sind in zahlreichen unterschiedlichen Ausführungsformen, bspw. als Unterschränke, Oberschränke oder auch als Hochschränke bekannt. Sie bestehen üblicherweise aus einem Korpus, der durch eine Tür oder Klappe verschließbar ist oder in dem eine Mehrzahl von Auszügen aufgenommen ist.

Für das Strukturelement, insbesondere ein Möbelelement, ist es von Vorteil, wenn im Verbindungsbereich zwei miteinander verbundener Elemente keine Schraubköpfe oder dergleichen hervorstehen bzw. in Senknuten angebracht sind. Dies sind typische Orte an denen sich Schmutz oder Staub besonders gut anlegt, und die aus hygienischen Gründen eine besonders intensive Reinigung benötigen. Es ist Ziel der vorliegenden Erfindung, ein Strukturelement, insbesondere für einen Einsatz als Möbelelement und vorzugsweise für eine Küche dahingehend weiterzubilden, dass dieses einen Verbindungsbereich zwischen zwei lösbar miteinander verbundenen Elementen aufweist, der von außen keinen Ansatzpunkt für eine mechanische Krafteinwirkung zum Lösen der Verbindung besitzt. Dadurch wird sichergestellt, dass die hierbei notwendigerweise vorhandenen Angriffspunkte zum Lösen der Verbindung nicht mit Staub oder Dreck verschmutzt werden können. Insgesamt liegt der vorliegenden Erfindung die Aufgabe zugrunde, ein Strukturelement zu schaffen, das bei Beibehaltung der vorstehenden Aufgabe einen besonders flexiblen Einsatz ermöglicht.

Die DE 198 07 663 A1 offenbart dabei ein Strukturelement, das sämtliche Merkmale aus dem Oberbegriff des Anspruchs 1 aufweist.

Die EP 1 287 763 A1 behandelt ein Verbundsystem einer modularen Möbelstruktur, das zum Verbinden verschiedener Strukturen Nuten vorsieht, in die ein Klemmelement eingespannt wird.

Die WO 2005/025376 A1 offenbart eine klappbare Ständerstruktur zum Aufhängen von Kleidung, die modular erweiterbar ist.

Das Strukturelement mit den Merkmalen des Anspruchs 1 überwindet die vorstehend aufgeführten Nachteile des Standes der Technik. Danach ist unter anderem vorgesehen, dass das Strukturelement, insbesondere ein Möbelelement, einen Verbindungskörper, der einen Arm aufweist, und ein Rahmenelement zum Anbringen an eine Stirnfläche des Arms des Verbindungskörpers umfasst. Dabei weist das Rahmenelement an einer Anlegefläche mindestens eine Ausnehmung zum Eingreifen eines Fixiermittels auf, um eine lösbare Verbindung mit dem Verbindungskörper herzustellen. Das Strukturelement ist ferner so ausgebildet, dass in dem Arm des Verbindungskörpers ein Verbindungsmittel vorhanden ist, um durch ein Eingreifen in die Ausnehmung des Rahmenelements eine lösbare Verbindung mit dem Rahmenelement herzustellen, wobei das Verbindungsmittel zwei in die Ausnehmung des Rahmenelements eingreifende Elemente aufweist, von denen mindestens eines über eine Ausnehmung, insbesondere eine umlaufende Nut verfügt, die dazu ausgelegt ist, mit dem Fixiermittel zum Arretieren des Verbindungskörpers an dem Rahmenelement zusammenzuwirken, und/oder das Verbindungsmittel magnetisch antreibbar ist und bei Betätigung ein Fixiermittel ausfährt.

Die Erfindung wird ebenfalls durch ein Strukturelement, insbesondere ein Möbelelement beschrieben, das einen Verbindungskörper, der einen Arm aufweist, und ein Rahmenelement zum Anbringen an eine Stirnseite des Armes des Verbindungskörpers umfasst. Dabei weist der Verbindungskörper mindestens eine Ausnehmung zum Eingreifen eines Fixiermittels auf, um eine lösbare Verbindung mit dem Rahmenelement herzustellen. Das Strukturelement ist dadurch gekennzeichnet, dass in dem Rahmenelement ein Verbindungsmittel vorhanden ist, um durch ein Eingreifen in die Ausnehmung des Verbindungskörpers eine lösbare Verbindung mit dem Verbindungskörper herzustellen, wobei das Verbindungsmittel zwei in die Ausnehmung des Verbindungskörpers eingreifende Elemente aufweist, von denen mindestens eines über eine Ausnehmung, insbesondere eine umlaufende Nut verfügt, die dazu ausgelegt ist, mit dem Fixiermittel zum Arretieren des Rahmenelements an dem Verbindungskörper zusammenzuwirken, und/oder das Verbindungsmittel magnetisch antreibbar ist und bei Betätigung ein Fixiermittel ausfährt.

Das Strukturelement besitzt also einen Verbindungskörper und ein damit zu verbindendes Rahmenelement. Der Verbindungskörper weist typischerweise die Form eines Arms auf und soll an seiner Stirnfläche mit dem Rahmenelement verbunden werden. Hierfür gibt es zwei Möglichkeiten, wobei die erste Möglichkeit ein Vorsehen eines Verbindungsmittels in dem Verbindungskörper und die zweite Möglichkeit ein Vorsehen eines Verbindungsmittels in dem Rahmenelement vorsieht. Je nach Anordnung des Verbindungsmittels ist das durch das Verbindungsmittel zu befestigende Gegenstück (Rahmenelement oder Verbindungskörper) mit einer Ausnehmung versehen, in die ein Fixiermittel des Verbindungsmittels eingreifen kann. Um die für Schmutz besonders anfälligen Schraubköpfe, Vertiefungen oder ähnlich ausgebildete mechanische Antriebsmittel zum Fixieren einer Verbindung weglassen zu können, schlägt die Erfindung vor, ein magnetisch antreibbares Verbindungsmittel vorzusehen, das bei Betätigung ein Fixiermittel ausfährt und damit in die Ausnehmung eines Gegenstücks eindringt, so dass es das Gegenstück mit dem Element, in dem das Verbindungsmittel angeordnet ist, lösbar verbindet.

Ferner ist möglich, dass das Verbindungsmittel durch zwei unterschiedlich lange Schrauben ausgebildert ist, die entweder im Rahmenelement oder in dem Verbindungskörper so eingeschraubt sind, dass sie an der Stirnseite des Rahmenelements und der Verbindungselements in unterschiedlicher Länge abstehen. Dabei hat eine der beiden abstehenden Schrauben im Bereich des abstehenden Endes der Schraube eine Ausnehmung, insbesondere eine umlaufende Nut, die in einem eingesteckten Zustand dazu dient, dass eine in die Ausnehmung platzierte Fixierschraube oder allgemein ein daran ansetzendes Fixiermittel für eine Arretierung des Rahmenelements zu dem Verbindungskörper sorgt.

Typischerweise ist diejenige Schraube mit der Ausnehmung versehen, die mit einer größeren Länge aus dem Rahmenelement oder dem Verbindungskörper absteht. Dabei ist zudem von Vorteil, wenn die Ausnehmung in einem Längenbereich der Schraube angeordnet ist, der -in einem eingeschraubten Zustand der Verbindungsmittel in dem Rahmenelement oder dem Verbindungskörper- weiter absteht als die andere Schraube. So wird ein senkrecht zu den Schrauben geführtes Fixiermittel nicht durch die kürzer abstehende Schraube beeinträchtigt.

Der Betrieb des Verbindungsmittels kann durch einen Magneten oder eine Magnetanordnung erzeugt werden. Denkbar wäre bspw. ein Polring, der alternierend verschiedene, magnetische Pole aneinanderreiht und mit einem entsprechend gepolten Gegenstück eines Magnetrings eine Magnetkupplung aufbauen kann. Dreht man nun ein Element dieser Magnetkupplung führt dies automatisch zu einer Kraftübertragung auf das andere Element dieser Magnetkupplung, wodurch ein Antrieb des Verbindungsmittels zum Betätigen des Fixiermittels angetrieben werden kann.

Vorteilhaft bei dem magnetisch antreibbaren Verbindungsmittel ist, dass das Verbindungsmittel bei einer erfolgreichen Verbindung von Rahmenelement und Verbindungskörper von außen nicht mehr sichtbar ist. Es sind daher auch keine mechanischen Angriffsflächen zum Lösen/Befestigen der Verbindung vorhanden, so dass diese auch keinen Schmutz anziehen. Vorzugsweise weist der Verbindungskörper im Wesentlichen die Form eines Kreuzes mit vier Armen auf, die gemäß einer besonders bevorzugten Ausführungsform gleich lang und/oder senkrecht zueinander sind.

Nach einer weiteren optionalen Fortbildung der Erfindung ist das Fixiermittel ein schraubenähnliches Element, insbesondere eine Schraube, die dazu ausgelegt ist, in die Ausnehmung des Rahmenelements oder des Verbindungskörpers einzugreifen und das Rahmenelement mit dem Verbindungskörper zu verbinden.

Gemäß einer Fortbildung der Erfindung umfasst das Strukturelement mindestens zwei Verbindungskörper, deren Raumorientierungen zueinander identisch sind und die voneinander beabstandet angeordnet sind.

Weiter ist nach der Erfindung vorgesehen, dass das Rahmenelement im Wesentlichen einen U-förmigen Grundaufbau aufweist und an den Stirnseiten der beiden Schenkel des U-förmigen Grundaufbaus mit jeweils einem der Verbindungskörper in Verbindung steht.

Vorzugsweise weist der Verbindungskörper im Wesentlichen die Form eines Kreuzes mit vier Armen auf und ist an jedem der Arme mit einem separaten Rahmenelement verbunden. Nach einer optionalen Modifikation der Verbindung umfasst eine Eckverbindung eines Rahmenelements, das im Wesentlichen einen U-förmigen Grundaufbau aufweist und bei dem die einzelnen Teile vorzugsweise jeweils einen Winkel von ca. 90° oder genau 90° einschließen, ein Winkelelement, das die Eckverbindung der einzelnen Teile des Rahmenelements fixiert.

Dabei kann das Winkelelement, das vorzugsweise einen Winkel von 90° aufweist, in jeweilige Bohrungen der die Eckverbindung ergebenden Teile des Rahmenelements eingeschoben werden, und durch Madenschrauben mit dem jeweiligen Teil fixiert werden.

Ferner kann vorgesehen sein, dass nach einem Befestigen des Winkelelements durch die Madenschrauben ein Klebstoff zur zusätzlichen Fixierung der Madenschrauben in deren Gewindegehäusen vorgesehen ist.

Die Erfindung umfasst ferner ein Strukturelement, das einen Hohlraum in einem vorzugsweise vertikal orientierten Abschnitt des Rahmenelements aufweist, der über eine partielle Nut in dem Rahmenelement von außen zugänglich ist. Typischerweise verläuft die Nut parallel zu Längsrichtung des Teilelements des Rahmenelements, in dem die Nut vorhanden ist.

Dabei ist in diesem Hohlraum ein Nutenstein angebracht, der eine Gewindebohrung aufweist, wobei der Nutenstein im Inneren des Hohlraumes angeordnet ist. Der Nutenstein besitzt solche Abmessung, dass er nicht durch die partielle Nut in dem Rahmenelement passt. Der Hohlraum ist derart ausgebildet, dass der in dem Hohlraum angeordnete Nutenstein darin verschoben werden kann. So ist es möglich, durch die partielle Nut mit dem Nutenstein zu interagieren und diesen in seinem Hohlraum zu verschieben.

Gemäß der Erfindung ist der Nutenstein mit einem Adapterelement verbindbar, vorzugsweise über eine Schraube, die ein zu der Gewindebohrung passendes Außengewinde aufweist, und die durch das Adapterelement gesteckt wird und ein zu der Gewindebohrung des Nutensteins passendes Außengewinde aufweist.

Nach einer weiteren Modifikation der Erfindung kann der Nutenstein an der Innenseite der partiellen Nut im Zusammenspiel mit dem Adapter entlang der partiellen Nut geklemmt werden, in dem der Adapter sich an eine Außenfläche der partiellen Nut anlegt und den Nutenkörper gegen das Innere des Hohlraums drückt, wodurch der Nutenstein an dem Rahmenelement befestigt ist. Das Rahmenelement wird demnach an der Innenseite von dem Nutenstein und an der Außenseite von dem Adapterelement geklemmt. Durch Verringern des Abstands von Adapter zu Nutenstein ist ein Verschieben des Nutensteins bzw. des Adapters entlang der partiellen Nut nicht mehr möglich, da die Klemmkraft zu groß ist. Vorzugsweise erfolgt die Klemmwirkung bzw. die Verringerung des Abstandes zwischen Nutenstein und Adapter durch eine Schraube, die den Adapter durchdringt und ihn in Richtung des Nutensteins drängt und mit der Gewindebohrung des Nutensteins in Eingriff steht.

Ferner kann vorgesehen sein, dass der Nutenstein Markierungen, vorzugsweise in Form von Strichen oder Rillen, aufweist, die eine vorbestimmte Positionierung des Nutensteins und des daran angebrachten Adapters in der partiellen Nut erlauben.

Nach einer weiteren Fortbildung der Erfindung ist der Nutenstein in Zusammenwirkung mit dem Adapter und einer den Adapter in Richtung Nutenstein drängenden Schraube dazu ausgelegt, die die partielle Nut definierende Umrandung des Rahmenelements teilweise zu klemmen. Die Klemmung erfolgt dabei zwischen Nutenstein und Adapter. Die Klemmkraft wird durch die Schraube aufgebracht, die den Adapter in Richtung des Nutensteins drängt und mit der Gewindebohrung des Nutensteins zusammenwirkt.

Dabei kann vorgesehen sein, dass der Adapter eine Ausnehmung aufweist und über eine Schraube mit dem Nutenstein verbindbar ist. Vorzugsweise ist der Adapter dazu ausgelegt, eine Verbindung mit einer Vielzahl von spezifisch ausgebildeten Haltern aufzunehmen, wobei die spezifischen Halter vorzugsweise auf den Adapter aufgesteckt sind.

Weitere Merkmale, Einzelheiten und Vorteile werden anhand der detaillierten Beschreibung der Zeichnungen deutlich. Es zeigen:
- Fig. 1a:: einen Verbindungskörper in verschiedenen Ansichten,
- Fig. 1b:: einen Verbindungskörper in verschiedenen Ansichten nach einer weiteren Ausführungsform,
- Fig. 2a:: eine andere Ausführungsart eines Verbindungskörpers in verschiedenen Ansichten,
- Fig. 2b:: einen Verbindungskörper in verschiedenen Ansichten nach einer weiteren Ausgestaltung,
- Fig. 3a:: ein Strukturelement in einem noch nicht zusammengefügten Zustand,
- Fig. 3b:: ein Strukturelement in einem noch nicht zusammengefügten Zustand nach einer weiteren Ausgestaltung,
- Fig. 4a:: ein Strukturelement in einem teilweise zusammengefügten Zustand,
- Fig. 4b:: ein Strukturelement in einem teilweise zusammengefügten Zustand nach einer weiteren Ausgestaltung,
- Fig. 4c:: eine Schnittansicht entlang der Längsachse im Bereich des Verbindungsmittels der weiteren Ausgestaltung,
- Fig. 5:: ein Strukturelement in einem zusammengefügten Zustand,
- Fig. 6:: eine alternative Ausführung eines Strukturelements in einem zusammengefügten Zustand,
- Fig. 7:: eine weitere Alternative eines Strukturelements in einem zusammengefügten Zustand,
- Fig. 8:: eine weitere Alternative eines Strukturelements in einem zusammengefügten Zustand,
- Fig. 9a:: eine Explosionsdarstellung der Verbindung zwischen einem Verbindungskörper und einem Rahmenelement,
- Fig. 9b:: eine Explosionsdarstellung der Verbindung zwischen einem Verbindungskörper und einem Rahmenelement nach einer weiteren Ausgestaltung,
- Fig. 10:: ein Verbindungsmittel in verschiedenen Ansichten,
- Fig. 11:: ein Rahmenelement, dessen Eckverbindung durch einen Kreis hervorgehoben ist,
- Fig. 12:: eine Eckverbindung eines Rahmenelements,
- Fig. 13:: eine schematische Darstellung in einer halbtransparenten Ansicht zur Erläuterung einer Eckverbindung eines Rahmenelements,
- Fig. 14:: eine Eckverbindung eines Rahmenelements in einer Explosionsdarstellung,
- Fig. 15:: ein Rahmenelement in einer Teilansicht,
- Fig. 16:: ein vergrößerter Ausschnitt eines Rahmenelements,
- Fig. 17:: ein Rahmenelement in einer perspektivischen Darstellung,
- Fig. 18:: ein Strukturelement in einem zusammengefügten Zustand, dessen partielle Nuten mit Nutenstein und Adapter durch Kreise hervorgehoben sind sowie eine vergrößerte Ansicht einer solchen partiellen Nut,
- Fig. 19:: die Teilansichten einer partiellen Nut mit Nutenstein und Adapter,
- Fig. 20:: einen Grundaufbau zur Erläuterung der Zusammenwirkung von Nutenstein, Adapter, Befestigungsschraube und Halteelement,
- Fig. 21:: einen Adapter in verschiedenen Ansichten,
- Fig. 22:: einen Nutenstein in einer perspektivischen Ansicht,
- Fig. 23:: einen Nutenstein in einer Front- und einer Rückansicht, und
- Fig. 24:: eine vergrößerte Darstellung einer partiellen Nut mit Nutenstein und Adapter.

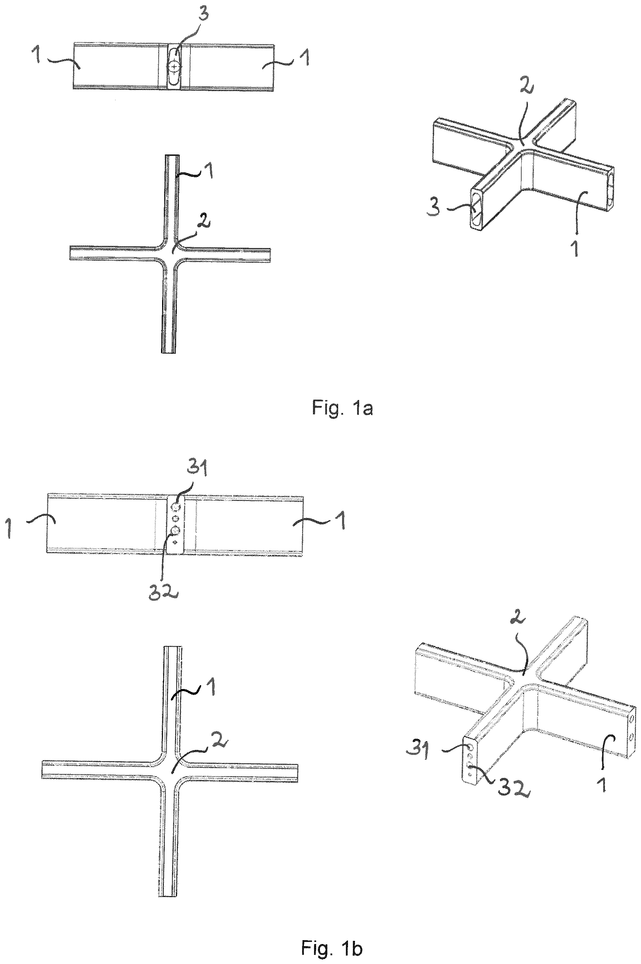

Figur 1a zeigt den Verbindungskörper in verschiedenen Ansichten. Man erkennt, dass der abgebildete Verbindungskörper im Wesentlichen die Form eines Kreuzes aufweist, das vier gleichlange Arme 1 besitzt. An der Stirnseite jedes Arms 1 ist eine Öffnung 3 vorgesehen, die dazu dient, das Verbindungsmittel teilweise aufzunehmen.

Zudem ist aus der Zeichnung entnehmbar, dass die einzelnen Arme 1 des Verbindungskörpers 2 zueinander im Wesentlichen eine Winkel von 90° aufweisen.

Figur 1b zeigt den Verbindungskörper 2 nach einer weiteren Ausgestaltung in verschiedenen Ansichten. Im Gegensatz zu dem in Fig. 1a dargestellten Verbindungskörper weist dieser an den Stirnseiten seiner Arme 1 mindestens zwei Ausnehmungen 31, 32 auf, die zum Aufnehmen des Verbindungsmittels 5 dienen. Dabei kann das Verbindungsmittel 5 durch zwei stabähnliche Elemente verkörpert sein, die in die Ausnehmungen 31, 32 eingeschraubt oder anderweitig fest in die Ausnehmungen 31, 32 eingebracht werden. Die weiteren nicht zur Aufnahme des Verbindunsmittels 5 vorgesehenen optionalen Ausnehmungen in der Stirnseite der Arme dienen für eine korrekte Ausrichtung beim Anlegen des Rahmenelements an den Verbindungskörper 2.

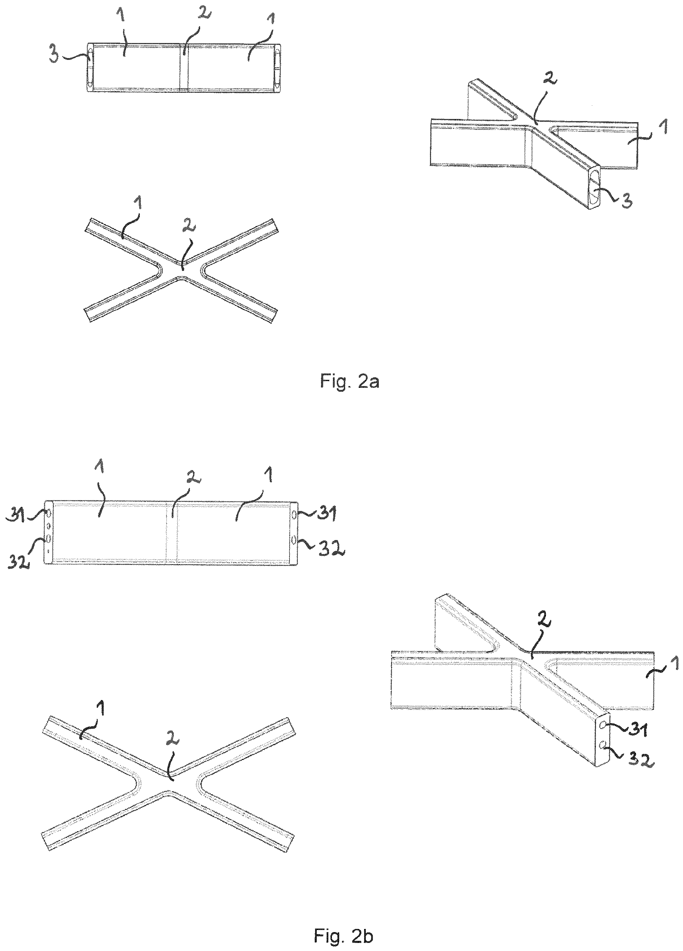

Figur 2a zeigt eine andere Ausgestaltung eines Verbindungskörpers 2, die ebenfalls vier Arme 1 und Ausnehmungen 3 an den Stirnseiten der jeweiligen Arme 1 aufweist, jedoch sind die Winkel, die die jeweiligen Arme 1 miteinander einschließen ungleich 90°.

Figur 2b zeigt eine andere Ausgestaltung eines Verbindungskörpers 2 nach der weiteren Ausgestaltung, die bis auf die bekannten Unterschiede dem in Fig. 2a dargestellten Verbindungskörper gleicht.

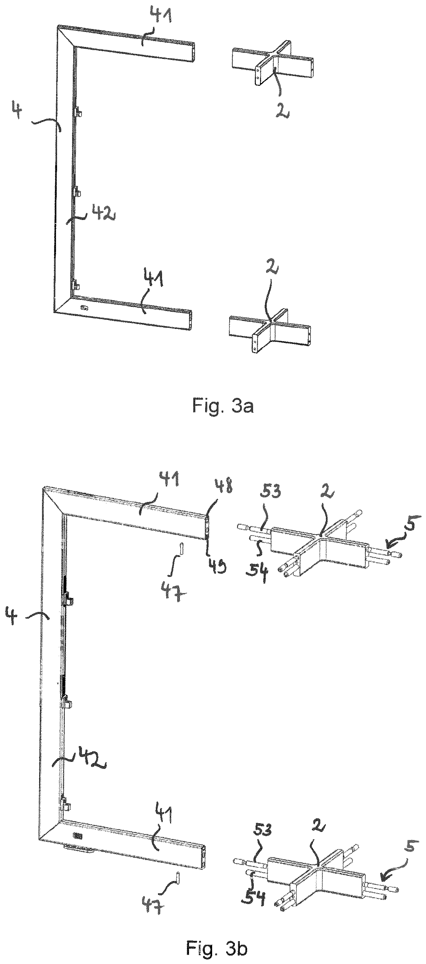

Figur 3a zeigt zwei Verbindungskörper 2 und ein an diese Verbindungskörper 2 anzufügendes Rahmenelement 4. Das Rahmenelement 4 weist dabei eine etwa U-förmige Grundform auf, und besitzt an den Stirnseiten der beiden Schenkel 41 der U-Form, die miteinander durch den Steg 42 verbunden werden, mindestens eine Ausnehmung zum Eingreifen eines Fixiermittels des Verbindungsmittels 5.

Fig. 3b zeigt zwei Verbindungskörper 2 und ein an diese Verbindungskörper 2 anzufügendes Rahmenelement 4 sowie ein in dem Verbindungskörper 2 bereits eingefügtes Verbindungsmittel 5, das ein erstes stabähnliches Element 53 und ein zweites stabähnliches Element 54 umfasst. Die beiden stabähnlichen Elemente 53, 54 sind mit einem ihrer Enden fest in eine der Ausnehmungen 31, 32 eingefügt und stehen unterschiedlich weit von der Stirnfläche des Verbindungskörpers 2 ab. Weiter erkennt man den Arretierstift 47, der dazu ausgelegt ist, das erste stabähnliche Element 53 in einem in das Rahmenelement 4 eingesteckten Zustand zu fixieren.

Das erste stabähnliche Element 53 steht gegenüber dem zweiten stabähnlichen Element 54 weiter von dem Verbindungskörper 2, an dem die beiden Elemente 53, 54 befestigt sind, weiter ab und weist in dem das zweite Element überragenden Abschnitt eine umlaufende Nut auf, die dazu ausgelegt ist, mit dem Arretierstift 47 zusammenzuwirken. Sind die beiden Elemente 53, 54 in ihre am Rahmenelement 4 entsprechenden Öffnungen 48, 49 eingesteckt, so wird das erste Element 53 durch den Arretierstift 47 fixiert, so dass eine feste Verbindung zwischen dem Verbindungskörper 2 und dem Rahmenelement 4 erzeugt wird.

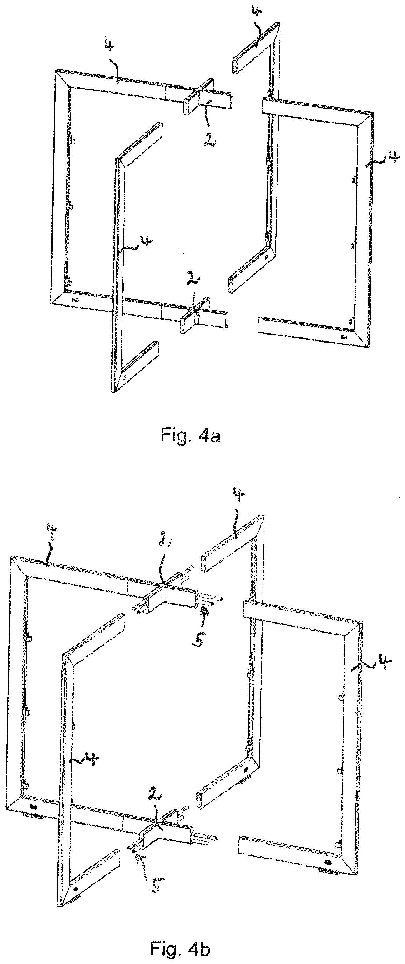

Figur 4a zeigt das Verbindungskörper 2, sowie insgesamt vier Rahmenelemente 4, die mit den jeweiligen Armen 1 des Verbindungskörpers 2 zusammenwirken sollen.

Fig. 4b zeigt den Verbindungskörper 2, sowie insgesamt vier Rahmenelemente 4, die mit den jeweiligen Armen 1 des Verbindungskörpers 2 zusammenwirken sollen. Dargestellt ist hierbei die weitere Ausgestaltung. Ferner sind in die Verbindungskörper 2 an jedem ihrer Arme 1 mit einem Verbindungsmittel 5 versehen, das in entsprechende Öffnungen an den zugehörigen Stirnseiten der Rahmenelemente einbringbar ist.

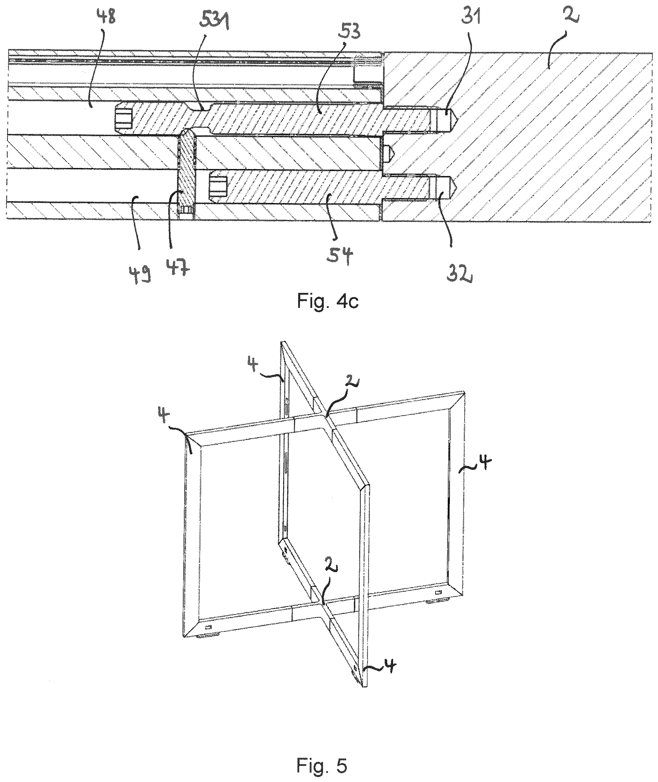

Fig. 4c zeigt einen Längsschnitt im Bereich eines Verbindungsmittels 5, bei einer intakten Verbindung von Rahmenelement 4 und Verbindungskörper 2 am Beispiel der weiteren Ausgestaltung.

Der Verbindungskörper 2 weist zur Ausfnahme des Verbindungsmittels zwei Ausnehmungen 31, 32 auf, in die jeweils ein stabähnliches Element 53, 54 des Verbindungsmittels 5 eingebracht ist. Bspw. können die Elemente 53, 54 hierin eingeschraubt werden, um eine starre Verbindung mit dem Verbindungskörper 2 einzugehen. Die dann mit dem Verbindungskörper fest verbundenen stabähnlichen Elemente 53, 54 werden in dazu passende Öffnungen 48, 49 des Rahmenelements 4 eingesteckt und über den Arretierstift 47 fixiert. Dabei greift der Arretierstift 47 in die am ersten Elemente 53 in Umfangsrichtung umlaufend ausgebildete Nut 531 ein und verhindert so ein Ausgleiten des Elements 53 aus der Öffnung 48. Der Arretierstift verläuft im Wesentlichen senkrecht zur Längsrichtung der Elemente 53, 54 und wird in einer Öffnung des Rahmenelements geführt.

Figur 5 zeigt ein Strukturelement, das insgesamt zwei Verbindungskörper 2 umfasst, an deren Armen jeweils ein separates Rahmenelement 4 angebunden ist. Dabei verbindet jedes dieser vier Rahmenelemente 4 die beiden Verbindungskörper 2 miteinander. Die Verbindungskörper 2 sind im Raum gleich orientiert, sind jedoch voneinander beabstandet. Man erkennt, dass die Verbindung zwischen einem Verbindungskörper 2 und einem Rahmenelement 4 keine mechanischen Einwirkungsmittel im Außenbereich der Verbindung besitzt. Hierzu ist von Vorteil, dass Schmutz oder Staub weniger Anhaftungsmöglichkeiten findet, so dass das vorgeschlagene Strukturelement besonders hohen hygienischen Ansprüche entspricht.

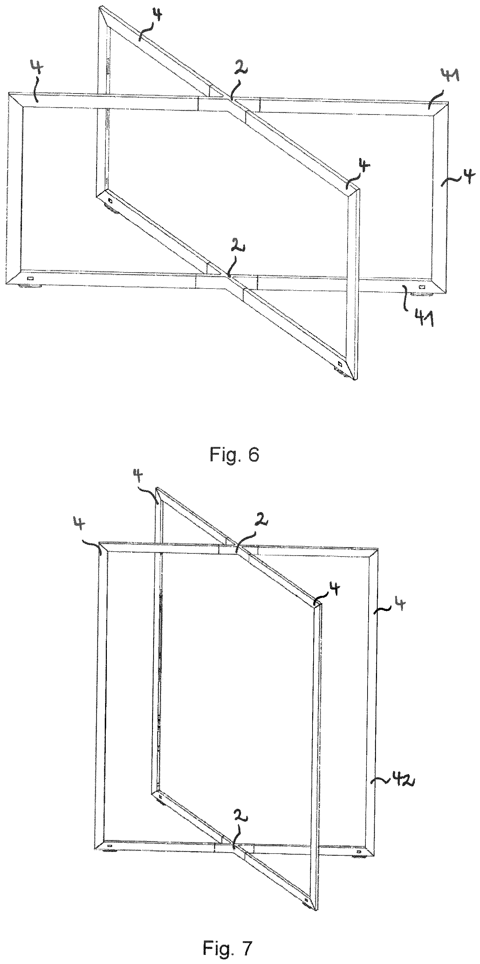

Figur 6 zeigt ein Strukturelement mit zwei Verbindungskörpern 2, deren Arme 1 nicht 90° zueinander versetzt sind. Darüber hinaus weisen die Rahmenelemente 4 längere Schenkel 41 auf, als die in Figur 5 dargestellten Rahmenelemente.

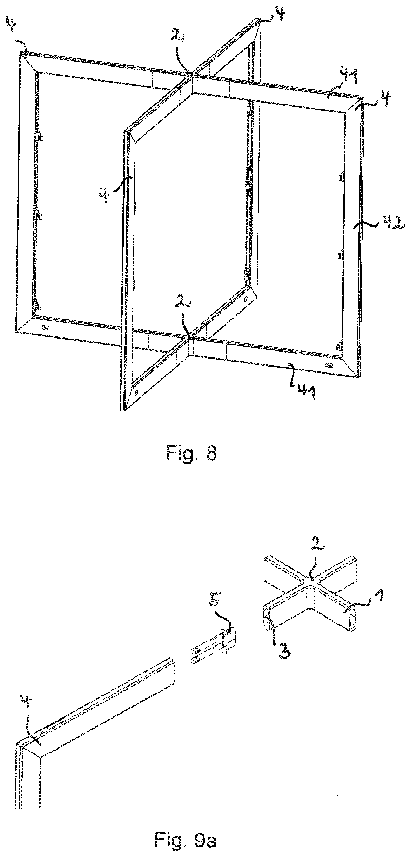

Die Figuren 7 und 8 zeigen weitere Variationen eines Strukturelements. Insbesondere ist hierbei der Steg 42, der die beiden Schenkel 41 eines Rahmenelements 4 miteinander verbindet etwas länger ausgeführt.

Figur 9a zeigt eine Explosionsdarstellung einer Verbindung zwischen einem Verbindungskörper 2 und einem Rahmenelement 4. Zwischen diesen beiden Elementen ist ein Verbindungsmittel 5 angeordnet, das zu einem Teil in einer Ausnehmung 3 des Verbindungskörpers 2 aufgenommen wird. Vorzugsweise wird dies darin mit einem Kleber fixiert.

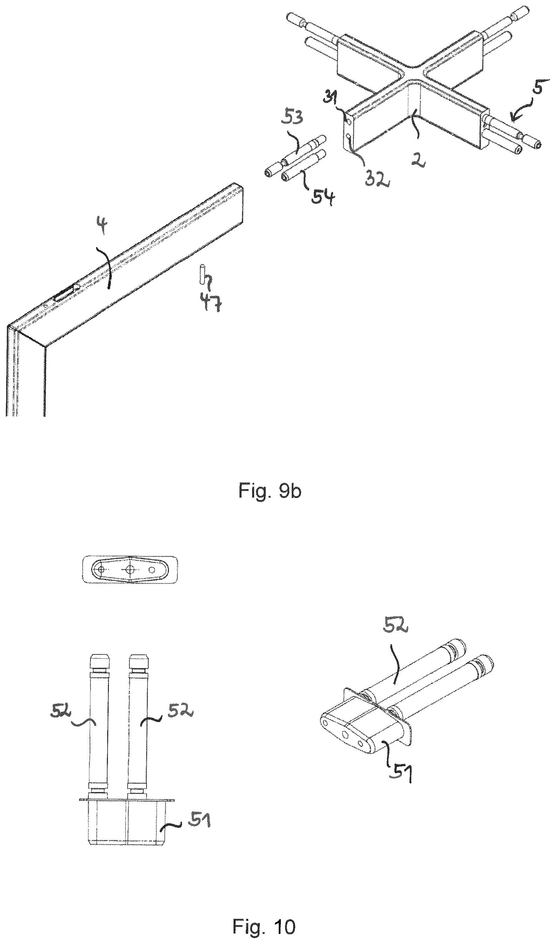

Figur 9b zeigt eine Explosionsdarstellung einer Verbindung zwischen einem Verbindungskörper 2 und einem Rahmenelement 4 nach der weiteren Ausgestaltung. Zwischen diesen beiden Elementen ist ein Verbindungsmittel 5 angeordnet, das zu einem Teil in einer Ausnehmung 3 des Verbindungskörpers 2 aufgenommen wird. Vorzugsweise wird dies darin mit einem Kleber fixiert oder durch Einschrauben der einzelnen Bestandteile 53, 54 in die in der Stirnseite des Arms des Verbindungskörpers 2 vorhandenen Öffnungen 31, 32 befestigt.

Figur 10 zeigt das Verbindungsmittel 5 in verschiedenen Ansichten. Man sieht, dass es einen Grundabschnitt 51 sowie zwei aus dem Grundabschnitte herausragende Fixiermittel 52 umfasst. Die beiden Fixiermittel 52 sind dabei im Wesentlichen stangenförmige Elemente, die parallel zueinander ausgerichtet sind. Das Verbindungsmittel ist magnetisch antreibbar, so dass bei Betätigung ein Fixiermittel dazu ausgelegt ist, das damit zu fixierende Rahmenelement 4 zu befestigen. Hierzu kann bspw. bei einem Betrieb des Verbindungsmittels 5 ein schraubenähnliches Element ausfahren, und das Rahmenelement in Richtung des Verbindungskörpers 2 ziehen.

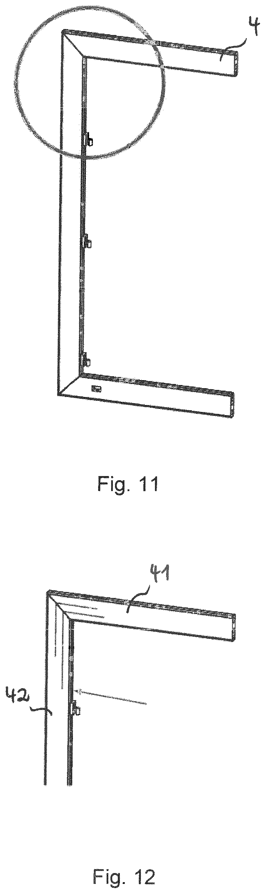

Figur 11 zeigt ein Rahmenelement 4, wobei die Eckverbindung des Rahmenelements 4 mit einem Kreis hervorgehoben ist.

Figur 12 zeigt einen vergrößerten Ausschnitt einer Eckverbindung eines Rahmenelements 4, bei dem der Schenkel 41 mit dem Steg 42 in einem 90°-Winkel zueinander verbunden sind.

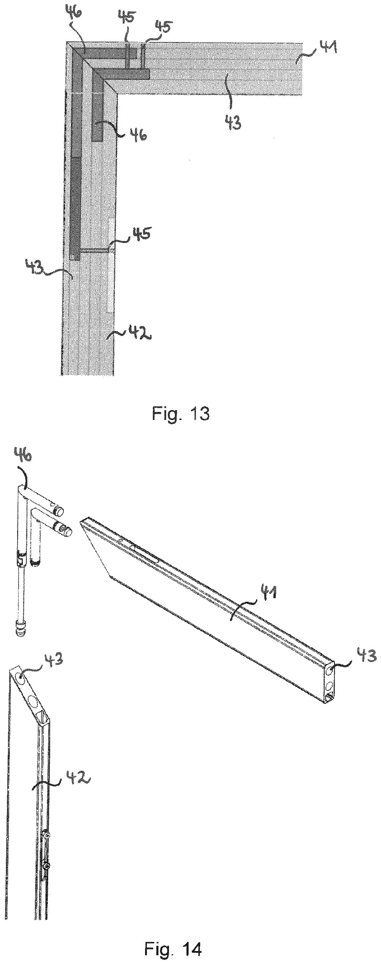

Figur 13 zeigt eine halbtransparente Darstellung dieser Eckverbindung, so dass man sowohl in dem Schenkel 41 als auch in dem Steg 42 zur Längsrichtung parallele Bohrungen 43 erkennt, die dazu ausgelegt sind, eine Winkelelement 46 teilweise aufzunehmen. Das Winkelelement 46 besitzt zwei geradlinige Abschnitte, die zueinander einen Winkel von 90° aufweisen. Durch das Einführen der Winkelelemente 46 in die zugehörigen Bohrungen 43 von Schenkel 41 und Steg 42 des Rahmenelements kann eine Eckverbindung realisiert werden, indem mit Hilfe von Madenschrauben 45 das Winkelelement 46 an dem Schenkel 41 bzw. dem Steg 42 arretiert wird.

Figur 14 zeigt eine Explosionsdarstellung einer Eckverbindung, in der man das Winkelelement 46 sowie die zugehörige Bohrung 43 in dem Steg 42 bzw. dem Schenkel 41 erkennen kann.

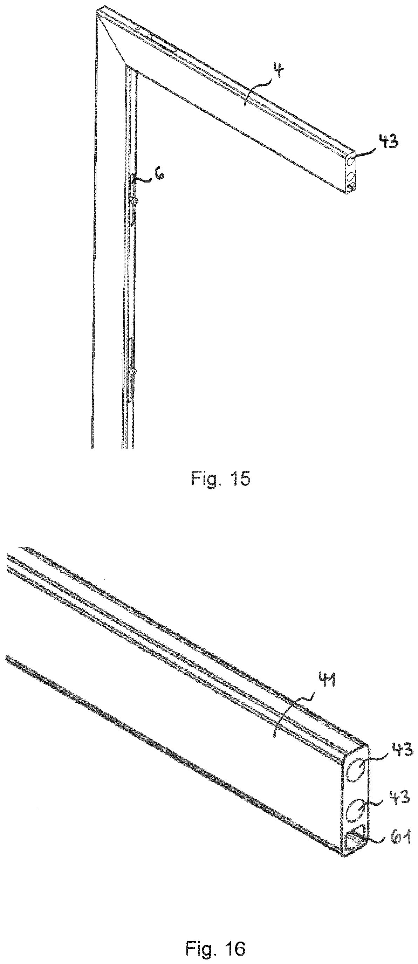

Figur 15 zeigt eine perspektivische Ansicht einer Eckverbindung in einem zusammengefügten Zustand.

Figur 16 zeigt eine vergrößerte Darstellung des Schenkels 41 eines Rahmenelements 4, das die Bohrungen 43 sowie eine darunterliegende Ausnehmung 61 für einen Nutenstein offenbart.

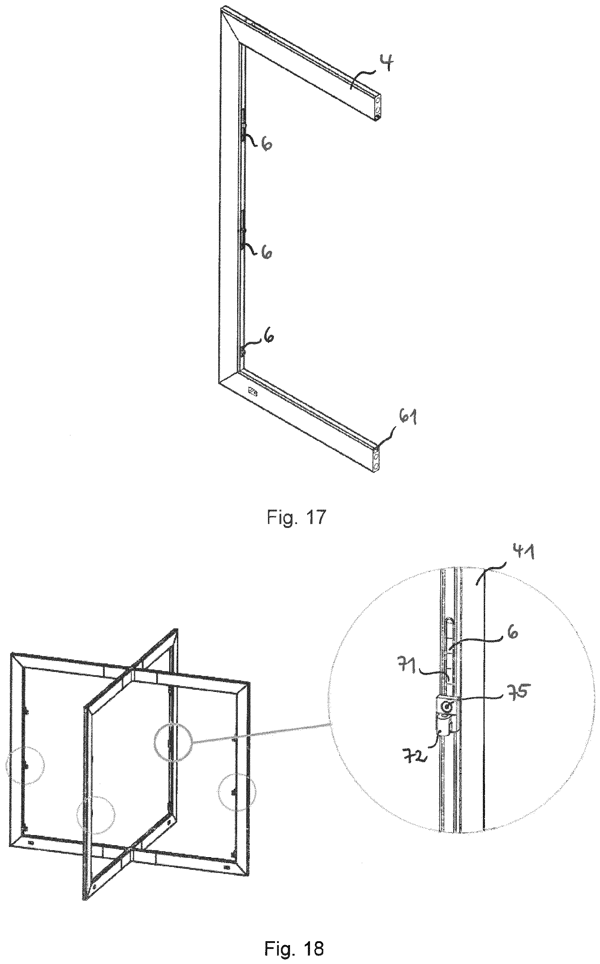

Figur 17 zeigt eine perspektivische Darstellung eines Rahmenelements 4, bei dem die partiellen Nuten 6, die eine Verbindung zu der Ausnehmung 61 ermöglichen, hervorgehoben sind.

Figur 18 zeigt ein Strukturelement in einem zusammengefügten Zustand, bei dem die partiellen Nuten mit Kreisen umgeben sind sowie eine vergrößerte Darstellung einer solchen partiellen Nut 6. Mit Hilfe einer solchen Nut 6 ist es möglich, einen Adapter 72, der in Verbindung mit einem Halter 73, 74 gebracht werden kann, Tablare, Fachböden oder andere Einsätze in dem Strukturelement in ihrer Höhe zu positionieren. Um an allen Stegen 41 der Rahmenelemente 4 einen Halter 73, 74 auf identischer Höhe zu platzieren, ist der in der partiellen Nut 6 angeordnete Nutenstein 71 mit einer Markierung versehen, die einen einfachen Rückschluss auf die Anordnungsposition in der partiellen Nut zulässt.

Mit Hilfe einer Schraube 75 kann der Nutenstein 71 bzw. der Adapter 72 an den Rand der partiellen Nut 6 geklemmt werden. Nach einem Lösen der Schraube ist der Nutenstein in seiner Ausnehmung 61 verschiebbar, so dass dann die Höhe des Adapters 72 neu eingestellt werden kann.

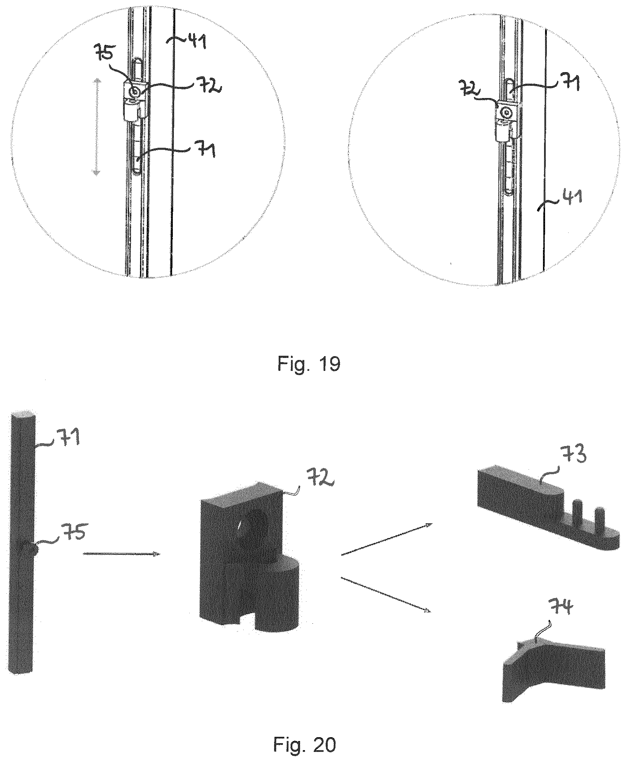

Figur 19 zeigt die Verschiebbarkeit des Adapters 72 entlang der partiellen Nut 6.

Figur 20 zeigt den Grundaufbau, der für die in der partiellen Nut verschiebbar gelagerte Anordnung notwendig ist. Man erkennt einen Nutenstein 71, dessen Längsausdehnung mindestens doppelt so lang ist, wie die Längsausdehnung der partiellen Nut 6 in dem Rahmenelement 4. In seiner Längsausdehnung mittig angeordnet befindet sich eine Schraube 75, die in der Darstellung der Figur 20 mit einer Gewindebohrung des Nutensteins 71 zusammenwirkt.

Der Adapter weist ein Durchgangsloch auf, das mit einer Stufe versehen ist, so dass eine Schraube mit Schraubenkopf, die durch das Durchgangsloch geführt ist, den Adapter bei einem Eingreifen in die Gewindebohrung des Nutensteins 71 in Richtung des Nutensteins 71 ziehen kann. Ferner sind zwei verschiedene Haltelemente 73, 74 dargestellt, die in den Adapter eingesteckt werden können. Die Haltelemente 73, 74 sind in Abhängigkeit des an dem Strukturelement zu befestigenden Tablars, Fachboden oder Rost ausgebildet.

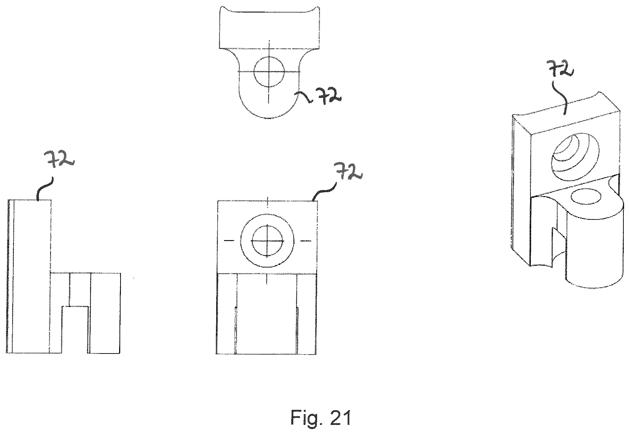

Figur 21 zeigt den Adapter in verschiedenen Ansichten. Man erkennt in seiner Draufsicht, dass eine Ausnehmung existiert, die das Einstecken von Haltern 73, 74 ermöglicht. Ferner erkennt man, dass mit einer Eintragung versehene Durchgangsloch, welches zum Befestigen an den Nutenstein 71 verwendet wird.

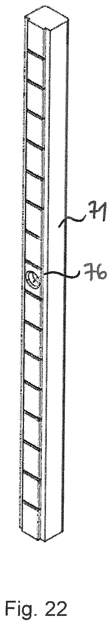

Figur 22 zeigt eine perspektivische Darstellung des Nutensteins 71 mit seiner mittig angeordneten Gewindebohrung 76. Man erkennt, dass der Nutenstein 71 quer verlaufende Rillen aufweist, die eine Positionierung des Nutensteins 71 in der partiellen Nut vereinfachen.

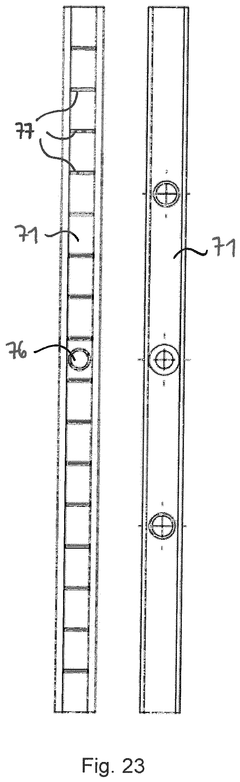

Figur 23 zeigt eine Front- und eine Rückansicht des Nutensteins 71 mit der Gewindebohrung 76 und den Markierungen 77.

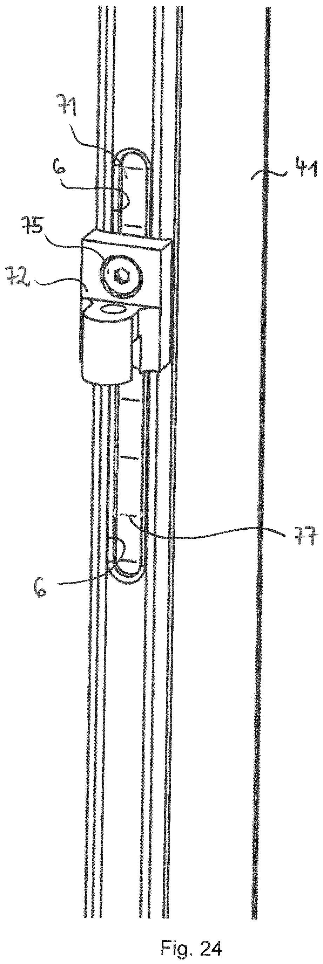

Figur 24 zeigt eine vergrößerte Darstellung einer partiellen Nut eines Stegs 41 eines Rahmenelements 4, woraus ersichtlich ist, dass durch Betätigen der Schraube 75 der Adapter 72 in Richtung des Nutensteins 71 gedrängt wird und dabei an den Rand der partiellen Nut 6 geklemmt wird. Somit ist ein Verschieben des Adapters 72 in Längsrichtung des Stegs 41 nicht mehr möglich und man kann mit Hilfe eines auf den Adapters 72 aufzusteckenden Halters hieran einen Tablar, einen Fachboden oder Ähnliches lagern.

## Patentansprüche

1. Strukturelement, insbesondere ein Möbelelement, umfassend:
einen Verbindungskörper (2), der einen Arm (1) aufweist, und
ein Rahmenelement (4) zum Anbringen an eine Stirnfläche des Arms (1) des Verbindungskörpers (2), wobei
das Rahmenelement (4) an einer Anlegefläche mindestens eine Ausnehmung (3) zum Eingreifen eines Fixiermittels (52) aufweist, um eine lösbare Verbindung mit dem Verbindungskörper (2) herzustellen, wobei
in dem Arm (1) des Verbindungskörpers (2) ein Verbindungsmittel (5) vorhanden ist, um durch ein Eingreifen in die Ausnehmung (3) des Rahmenelements (4) eine lösbare Verbindung mit dem Rahmenelement (4) herzustellen,
das Verbindungsmittel (5) zwei in die Ausnehmung (3) des Rahmenelements (4) eingreifende Elemente aufweist, von denen mindestens eines über eine Ausnehmung (3), insbesondere eine umlaufende Nut verfügt, die dazu ausgelegt ist, mit dem Fixiermittel (52) zum Arretieren des Verbindungskörpers (2) an dem Rahmenelement (4) zusammenzuwirken, und/oder
das Verbindungsmittel (5) magnetisch antreibbar ist und bei Betätigung ein Fixiermittel (52) ausfährt,
**dadurch gekennzeichnet, dass**
das Rahmenelement (4) im Wesentlichen einen U-förmigen Grundaufbau aufweist und an den Stirnseiten der beiden Schenkel des U-förmigen Grundaufbaus mit jeweils einem der Verbindungskörper (2) in Verbindung steht, wobei
das Strukturelement ferner einen Hohlraum in einem vorzugsweise vertikal orientierten Abschnitt des Rahmenelements (4) umfasst, der über eine partielle Nut (6) in dem Rahmenelement (4) von außen zugänglich ist,
in diesem Hohlraum ein Nutenstein (71) angebracht ist, der eine Gewindebohrung aufweist, und der Nutenstein im Inneren des Hohlraums angeordnet ist, und
der Nutenstein (71) mit einem Adapterelement verbindbar ist, vorzugsweise über eine Schraube, die durch das Adapterelement gesteckt wird und ein zu der Gewindebohrung des Nutensteins (71) passendes Außengewinde aufweist.

2. Strukturelement, insbesondere ein Möbelelement, umfassend:
einen Verbindungskörper (2), der einen Arm (1) aufweist, und
ein Rahmenelement (4) zum Anbringen an eine Stirnseite des Arms (1) des Verbindungskörpers (2), wobei
der Verbindungskörper (2) mindestens eine Ausnehmung (3) zum Eingreifen eines Fixiermittels (52) aufweist, um eine lösbare Verbindung mit dem Rahmenelement (4) herzustellen, wobei
in dem Rahmenelement (4) ein Verbindungsmittel (5) vorhanden ist, um durch ein Eingreifen in die Ausnehmung (3) des Verbindungskörpers (2) eine lösbare Verbindung mit dem Verbindungskörper (2) herzustellen,
das Verbindungsmittel (5) zwei in die Ausnehmung (3) des Verbindungskörpers (2) eingreifende Elemente aufweist, von denen mindestens eines über eine Ausnehmung (3), insbesondere eine umlaufende Nut verfügt, die dazu ausgelegt ist, mit dem Fixiermittel (52) zum Arretieren des Rahmenelements (4) an dem Verbindungskörper (2) zusammenzuwirken, und/oder
das Verbindungsmittel (5) magnetisch antreibbar ist und bei Betätigung ein Fixiermittel (52) ausfährt,
**dadurch gekennzeichnet, dass**
das Rahmenelement (4) im Wesentlichen einen U-förmigen Grundaufbau aufweist und an den Stirnseiten der beiden Schenkel des U-förmigen Grundaufbaus mit jeweils einem der Verbindungskörper (2) in Verbindung steht, wobei
das Strukturelement ferner einen Hohlraum in einem vorzugsweise vertikal orientierten Abschnitt des Rahmenelements (4) umfasst, der über eine partielle Nut (6) in dem Rahmenelement (4) von außen zugänglich ist,
in diesem Hohlraum ein Nutenstein (71) angebracht ist, der eine Gewindebohrung aufweist, und der Nutenstein (71) im Inneren des Hohlraums angeordnet ist, und
der Nutenstein (71) mit einem Adapterelement verbindbar ist, vorzugsweise über eine Schraube, die durch das Adapterelement gesteckt wird und ein zu der Gewindebohrung des Nutensteins (71) passendes Außengewinde aufweist.

3. Strukturelement nach einem der vorhergehenden Ansprüche, wobei der Verbindungskörper (2) im Wesentlichen die Form eines Kreuzes mit vier Armen (1), die vorzugsweise gleich lang und/oder senkrecht zueinander sind, aufweist.

4. Strukturelement nach einem der vorhergehenden Ansprüche, wobei das Fixiermittel (52) eine Schraube ist, die dazu ausgelegt ist, in die Ausnehmung (3) des Rahmenelements (4) oder des Verbindungskörpers (2) einzugreifen und das Rahmenelement (4) mit dem Verbindungskörper (2) zu verbinden.

5. Strukturelement nach einem der vorhergehenden Ansprüche, wobei das Fixiermittel (52) über eine magnetische Kopplung mit einem Magneten antreibbar ist.

6. Strukturelement nach einem der vorhergehenden Ansprüche, ferner umfassend mindestens zwei Verbindungskörper (2), deren Raumorientierung zueinander identisch und die voneinander beabstandet angeordnet sind.

7. Strukturelement nach einem der vorhergehenden Ansprüche, wobei der Verbindungskörper (2) im Wesentlichen die Form eines Kreuzes mit vier Armen (1) aufweist und an jedem der Arme (1) mit einem separaten Rahmenelement (4) verbunden ist.

8. Strukturelement nach einem der vorhergehenden Ansprüche, wobei eine Eckverbindung eines Rahmenelements (4), das im Wesentlichen einen U-förmigen Grundaufbau aufweist, bei dem die einzelnen Teile vorzugsweise jeweils einen Winkel von ca. 90° einschließen, ein Winkelelement umfasst, das die Eckverbindung der einzelnen Teile fixiert.

9. Strukturelement nach Anspruch 8, wobei das Winkelelement, das vorzugsweise einen Winkel von 90° aufweist, in jeweilige Bohrungen der die Eckverbindung ergebenden Teile des Rahmenelements (4) eingeschoben wird, und durch Madenschrauben mit dem jeweiligen Teil fixiert ist.

10. Strukturelement nach Anspruch 9, wobei, nach einem Befestigen des Winkelelements durch die Madenschrauben, ein Klebstoff zur zusätzlichen Fixierung der Madenschrauben in deren Gewindegehäuse vorgesehen ist.

11. Strukturelement nach einem der vorhergehenden Ansprüche, wobei der Nutenstein (71) an der Innenseite der partiellen Nut im Zusammenspiel mit dem Adapter entlang der partiellen Nut geklemmt werden kann, indem der Adapter sich an eine Außenfläche der partiellen Nut anlegt und den Nutenkörper gegen das Innere des Hohlraums drückt, wodurch der Nutenstein (71) an dem Rahmenelement (4) befestigt ist, vorzugsweise erfolgt dies mit Hilfe einer Schraube, die den Adapter durchdringt und ihn in Richtung des Nutensteins (71) drängt und mit der Gewindebohrung des Nutensteins (71) in Eingriff steht.

12. Strukturelement nach einem der vorhergehenden Ansprüche, wobei der Nutenstein (71) Markierungen, vorzugsweise in Form vom Strichen oder Rillen, aufweist, die eine vorbestimmte Positionierung des Nutensteins (71) und des daran angebrachten Adapters in der partiellen Nut erlauben.

13. Strukturelement nach einem der vorhergehenden Ansprüche, wobei der Nutenstein (71) in Zusammenwirkung mit dem Adapter und einer den Adapter in Richtung Nutenstein (71) drängenden Schraube dazu ausgelegt ist, die die partielle Nut definierende Umrandung des Rahmenelements (4) teilweise zu klemmen.

14. Strukturelement nach einem der vorhergehenden Ansprüche, ferner umfassend einen Adapter, das eine Ausnehmung (3) aufweist und über eine Schraube mit dem Nutenstein (71) verbindbar ist.

15. Strukturelement nach Anspruch 14, wobei der Adapter dazu ausgelegt ist, eine Verbindung mit einer Vielzahl von spezifisch ausgebildeten Haltern aufzunehmen, wobei die spezifischen Halter vorzugsweise auf den Adapter aufgesteckt sind.

## Claims

1. A structural element, in particular a furniture element, comprising:
a connection member (2) that has an arm (1); and
a frame element (4) for attachment to a front face of the arm (1) of the connection member (2), wherein
the frame element (4) has at least one cutout (3) at a resting surface for engaging a fixing means (52) to establish a releasable connection to the connection member (2); wherein
a connection means (5) is present in the arm (1) of the connection member (5) to establish a releasable connection to the frame element (4) by an engagement into the cutout (3) of the frame element;
the connection means (5) has two elements which engage into the cutout (3) of the frame element (4) and of which at least one has a cutout (3), in particular a peripheral groove, that is configured to cooperate with the fixing means (52) to lock the connection member (2) to the frame element (4); and/or
the connection means (5) is mechanically drivable and extends a fixing means (52) on actuation,
**characterized in that**
the frame element (4) substantially has a U-shaped basic structure and is connected to a respective one of the connection members (2) at the front sides of the two limbs of the U-shaped basic structure, with
the structural element furthermore comprising a hollow space in a preferably vertically oriented section of the frame element (4) that is accessible from the outside via a partial groove (6) in the frame element (4);
with a slot nut (71) being attached in this hollow space that has a threaded bore, and with the slot nut being arranged in the interior of the hollow space; and
with the slot nut (71) being connectable to an adapter element, preferably via a screw, that is pushed through the adapter element and has an external thread matching the threaded bore of the slot nut (71).

2. A structural element, in particular a furniture element, comprising:
a connection member (2) that has an arm (1); and
a frame element (4) for attachment to a front side of the arm (1) of the connection member (2), wherein
the connection member (2) has at least one cutout (3) for engaging a fixing means (52) to establish a releasable connection to the frame element (4); wherein
a connection means (5) is present in the frame element (4) to establish a releasable connection to the connection member (2) by an engagement into the cutout (3) of the connection member (2);
the connection means (5) has two elements which engage into the cutout (3) of the connection member (2) and of which at least one has a cutout (3), in particular a peripheral groove, that is configured to cooperate with the fixing means (52) to lock the frame element (4) to the connection member (2); and/or
the connection means (5) is mechanically drivable and extends a fixing means (52) on actuation,
**characterized in that**
the frame element (4) substantially has a U-shaped basic structure and is connected to a respective one of the connection members (2) at the front sides of the two limbs of the U-shaped basic structure, with
the structural element furthermore comprising a hollow space in a preferably vertically oriented section of the frame element (4) that is accessible from the outside via a partial groove (6) in the frame element (4);
with a slot nut (71) being attached in this hollow space that has a threaded bore, and with the slot nut (71) being arranged in the interior of the hollow space; and
with the slot nut (71) being connectable to an adapter element, preferably via a screw, that is pushed through the adapter element and has an external thread matching the threaded bore of the slot nut (71).

3. A structural element in accordance with one of the preceding claims, wherein the connection member (2) substantially has the shape of a cross having four arms (1) that are preferably of equal length and/or are perpendicular to one another.

4. A structural element in accordance with one of the preceding claims, wherein the fixing means (52) is a screw that is configured to engage into the cutout (3) of the frame element (4) or of the connection member (2) and to connect the frame element (4) to the connection member (2).

5. A structural element in accordance with one of the preceding claims, wherein the fixing means (52) is drivable via magnetic coupling by a magnet.

6. A structural element in accordance with one of the preceding claims, further comprising at least two connection members (2) whose spatial orientation to one another is identical and that are arranged spaced apart from one another.

7. A structural element in accordance with one of the preceding claims, wherein the connection member (2) substantially has the shape of a cross having four arms (1) and is connected to a separate frame element (4) at each of the arms (1).

8. A structural element in accordance with one of the preceding claims, wherein a corner connection of a frame element (4), that substantially has a U-shaped basic structure, in which the individual parts preferably each include an angle of approximately 90°, comprises an angular element that fixes the corner connection of the individual parts.

9. A structural element in accordance with claim 8, wherein the angular element that preferably has an angle of 90° is pushed into respective bores of the parts of the frame element (4) producing the corner connection and is fixed to the respective part by grubs screws.

10. A structural element in accordance with claim 9, wherein an adhesive for an additional fixing of the grub screws in their thread housings is provided after a fastening of the angular element by the grub screws.

11. A structural element in accordance with one of the preceding claims, wherein the slot nut (71) can be clamped to the inner side of the partial groove in interaction with the adapter along the partial groove in that the adapter lays alongside at an outer surface of the partial groove and presses the slot member against the interior of the hollow space, whereby the slot nut (71) is fastened to the frame element (4); and wherein this preferably takes place with the aid of a screw that passes through the adapter and urges it in the direction of the slot nut (71) and is in engagement with the threaded bore of the slot nut (71).

12. A structural element in accordance with one of the preceding claims, wherein the slot nut (71) has markings, preferably in the form of lines or grooves that permit a predefined positioning of the slot nut (71) and of the adapted attached thereto in the partial groove.

13. A structural element in accordance with one of the preceding claims, wherein the slot nut (71) is configured in interaction with the adapter and with a screw urging the adapter in the direction of the slot nut (71) to partially clamp the boundary of the frame element (4) defining the partial groove.

14. A structural element in accordance with one of the preceding claims, further comprising an adapter that has a cutout (3) and that is connectable to the slot nut (71) via a screw.

15. A structural element in accordance with claim 14, wherein the adapter is configured to receive a connection with a plurality of specifically configured holders, with the specific holders preferably being placed onto the adapter.

## Revendications

1. Élément structurel, en particulier élément de meuble, comprenant :
un corps de liaison (2), qui comporte un bras (1) et
un élément de cadre (4) destiné à être monté sur une surface frontale du bras (1) du corps de liaison (2),
l'élément de cadre (4) comportant sur une surface d'appui au moins un évidement (3) pour la venue en prise d'un moyen de fixation (52), pour réaliser une liaison libérable avec le corps de liaison (2),
un moyen de liaison (5) se trouvant dans le bras (1) du corps de liaison (2), pour réaliser une liaison libérable avec l'élément de cadre (4) par une venue en prise dans l'évidement (3) de l'élément de cadre (4),
le moyen de liaison (5) comportant deux éléments venant en prise dans l'évidement (3) de l'élément de cadre (4), dont au moins un dispose d'un évidement (3), en particulier une rainure périphérique, qui est conçue pour coopérer avec le moyen de fixation (52) pour verrouiller le corps de liaison (2) sur l'élément de cadre (4), et/ou
le moyen de liaison (5) pouvant être entraîné de manière magnétique et, lors d'un actionnement, faisant sortir un moyen de fixation (52),
**caractérisé en ce que**
l'élément de cadre (4) présente essentiellement une construction de base en forme de U et est en liaison avec respectivement un des corps de liaison (2) par les faces frontales des deux branches de la construction de base en forme de U,
l'élément structurel comprend en outre une cavité dans une partie de l'élément de cadre (4) orientée sensiblement de manière verticale, qui est accessible de l'extérieur par le biais d'une rainure partielle (6) dans l'élément de cadre (4),
un coulisseau (71) est placé dans cette cavité, lequel comporte un trou fileté, et le coulisseau est disposé à l'intérieur de la cavité, et
le coulisseau (71) peut être relié à un élément adaptateur, de préférence par le biais d'une vis, qui passe à travers l'élément adaptateur et comporte un filetage extérieur adapté au trou fileté du coulisseau (71).

2. Élément structurel, en particulier élément de meuble, comprenant :
un corps de liaison (2), qui comporte un bras (1) et
un élément de cadre (4) destiné à être monté sur une face frontale du bras (1) du corps de liaison (2),
le corps de liaison (2) comportant au moins un évidement (3) pour la venue en prise d'un moyen de fixation (52), pour réaliser une liaison libérable avec l'élément de cadre (4),
un moyen de liaison (5) se trouvant dans l'élément de cadre (4), pour réaliser une liaison libérable avec le corps de liaison (2) par une venue en prise dans l'évidement (3) du corps de liaison (2),
le moyen de liaison (5) comportant deux éléments venant en prise dans l'évidement (3) du corps de liaison (2), dont au moins un dispose d'un évidement (3), en particulier une rainure périphérique, qui est conçue pour coopérer avec le moyen de fixation (52) pour verrouiller l'élément de cadre (4) sur le corps de liaison (2), et/ou
le moyen de liaison (5) pouvant être entraîné de manière magnétique et, lors d'un actionnement, faisant sortir un moyen de fixation (52),
**caractérisé en ce que**
l'élément de cadre (4) présente essentiellement une construction de base en forme de U et est en liaison avec respectivement un des corps de liaison (2) par les faces frontales des deux branches de la construction de base en forme de U,
l'élément structurel comprend en outre une cavité dans une partie de l'élément de cadre (4) orientée sensiblement de manière verticale, qui est accessible de l'extérieur par le biais d'une rainure partielle (6) dans l'élément de cadre (4),
un coulisseau (71) est placé dans cette cavité, lequel comporte un trou fileté, et le coulisseau (71) est disposé à l'intérieur de la cavité, et
le coulisseau (71) peut être relié à un élément adaptateur, de préférence par le biais d'une vis, qui passe à travers l'élément adaptateur et comporte un filetage extérieur adapté au trou fileté du coulisseau (71).

3. Élément structurel selon l'une des revendications précédentes, dans lequel le corps de liaison (2) présente sensiblement la forme d'une croix avec quatre bras (1), qui sont de préférence de longueur identique et/ou perpendiculaires entre eux.

4. Élément structurel selon l'une des revendications précédentes, dans lequel le moyen de fixation (52) est une vis, qui est conçue pour venir en prise dans l'évidement (3) de l'élément de cadre (4) ou du corps de liaison (2) et relier l'élément de cadre (4) au corps de liaison (2).

5. Élément structurel selon l'une des revendications précédentes, dans lequel le moyen de fixation (52) peut être entraîné par le biais d'un couplage magnétique avec un aimant.

6. Élément structurel selon l'une des revendications précédentes, comprenant en outre au moins deux corps de liaison (2), dont l'orientation dans l'espace l'un par rapport à l'autre est identique et qui sont disposés espacés l'un de l'autre.

7. Élément structurel selon l'une des revendications précédentes, dans lequel le corps de liaison (2) présente sensiblement la forme d'une croix avec quatre bras (1) et est relié au niveau de chaque bras (1) à un élément de cadre (4) séparé.

8. Élément structurel selon l'une des revendications précédentes, dans lequel une jonction d'angle d'un élément de cadre (4), qui présente essentiellement une construction de base en forme de U, au niveau de laquelle les différentes pièces forment de préférence respectivement un angle d'environ 90°, comprend un élément d'angle, qui fixe la jonction d'angle des différentes pièces.

9. Élément structurel selon la revendication 8, dans lequel l'élément d'angle, qui présente de préférence un angle de 90°, est inséré dans des trous respectifs des pièces de l'élément de cadre (4) formant la jonction d'angle, et est fixé à la pièce respective par des vis sans tête.

10. Élément structurel selon la revendication 9, dans lequel, après une fixation de l'élément d'angle par les vis sans tête, une colle est prévue pour la fixation supplémentaire des vis sans tête dans leur logement fileté.

11. Élément structurel selon l'une des revendications précédentes, dans lequel le coulisseau (71) peut être coincé sur la face intérieure de la rainure partielle en coopération avec l'adaptateur le long de la rainure partielle par placement de l'adaptateur sur une surface extérieure de la rainure partielle et pression par celui-ci du corps de rainure contre l'intérieur de la cavité, moyennant quoi le coulisseau (71) est fixé sur l'élément de cadre (4), ceci étant de préférence effectué à l'aide d'une vis, qui traverse l'adaptateur et le pousse en direction du coulisseau (71) et qui est en prise avec le trou fileté du coulisseau (71).

12. Élément structurel selon l'une des revendications précédentes, dans lequel le coulisseau (71) comporte des repères, de préférence sous la forme de traits ou de cannelures, qui permettent un positionnement prédéfini du coulisseau (71) et de l'adaptateur monté sur celui-ci dans la rainure partielle.

13. Élément structurel selon l'une des revendications précédentes, dans lequel le coulisseau (71), en coopération avec l'adaptateur et une vis poussant l'adaptateur en direction du coulisseau (71), est conçu pour coincer en partie la bordure de l'élément de cadre (4) définissant la rainure partielle.

14. Élément structurel selon l'une des revendications précédentes, comprenant en outre un adaptateur, qui comporte un évidement (3) et qui peut être relié au coulisseau (71) par le biais d'une vis.

15. Élément structurel selon la revendication 14, dans lequel l'adaptateur est conçu pour établir une liaison avec une pluralité de supports réalisés de manière spécifique, les supports spécifiques étant de préférence emboîtés sur l'adaptateur.
